(19) Europäisches Patentamt
European Patent Office
Office européen des brevets

(11) Veröffentlichungsnummer: **0 034 239**
**B1**

# (12) EUROPÄISCHE PATENTSCHRIFT

(45) Veröffentlichungstag der Patentschrift: **07.03.84**

(51) Int. Cl.³: **C 07 F 9/40**, C 07 F 9/32

(21) Anmeldenummer: **81100033.0**

(22) Anmeldetag: **07.01.81**

(54) **Verfahren zur Herstellung von Alkanphosphonsäurediarylestern und bzw Alkanphosphinsäurearylestern.**

(30) Priorität: **19.01.80 DE 3001895**

(43) Veröffentlichungstag der Anmeldung: **26.08.81 Patentblatt 81/34**

(45) Bekanntmachung des Hinweises auf die Patenterteilung: **07.03.84 Patentblatt 84/10**

(84) Benannte Vertragsstaaten: **BE CH DE FR GB IT LI NL**

(56) Entgegenhaltungen: **US - A - 3 261 890**

(73) Patentinhaber: **BAYER AG, Konzernverwaltung RP Patentabteilung, D-5090 Leverkusen 1 Bayerwerk (DE)**

(72) Erfinder: **Block, Hans-Dieter, Dr., Roggendorfstrasse 65, D-5000 Köln 80 (DE)**
Erfinder: **Fröhlen, Hans-Günther, Im Holzhausen 92, D-5090 Leverkusen 3 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 034 239 B1

ACTORUM AG

# Verfahren zur Herstellung von Alkanphosphonsäurediarylestern und bzw. Alkanphosphinsäurearylestern

Die vorliegende Erfindung betrifft ein Verfahren zur Herstellung von Alkanphosphonsäurediarylestern und bzw. Alkanphosphinsäurearylestern.

Alkanphosphonsäurediarylester und Alkanphosphinsäurearylester sind Verbindungsklassen, für die viele Anwendungsmöglichkeiten bestehen. Insbesondere Alkanphosphonsäurediarylester eignen sich zusammen mit Diolen für die Synthese hochmolekularer Polyphosphonate, die sich durch hohe Brandwidrigkeit und thermische Beständigkeit auszeichnen.

Die US-Patentschrift 3 578 731 beschreibt die Herstellung von Polyphosphonaten niederen Polymerisationsgrades durch alkalisch katalysierte Umesterung von Phosphonsäurediarylestern; die US-Patentschrift 2 682 522 gibt ein Verfahren zur Herstellung von Polyphosphonaten aus Phosphonsäurediarylestern und aromatischen Dihydroxyverbindungen an.

Die an den zitierten Stellen genannten vielfältigen Einsatzmöglichkeiten haben die Suche nach einfachen, technisch durchführbaren Synthesen für die als Ausgangsstoffe notwendigen Alkanphosphonsäurediarylester erforderlich gemacht.

Alkanphosphonsäurediarylester sind bislang z.B. durch Reaktion von Alkanphosphonsäuredihalogeniden mit Phenolen unter Abspaltung von Halogenwasserstoff hergestellt worden. Ein anderes bekanntes Verfahren ist die Arbusow-Umlagerung von Diarylalkylphosphiten mit Alkylierungsmitteln wie Alkyljodiden oder auch Sulfonsäurealkylestern (vgl. z.B. R.G. Laughlin, J. Org. Chem. 27, 3644 (1962)).

Die bekannten Verfahren konnten nicht immer voll befriedigen, da die für den erstgenannten Weg erforderlichen Alkanphosphonsäuredichloride im allgemeinen keine handelsüblichen Substanzen sind und auch im allgemeinen aus handelsüblichen Substanzen in einstufiger Reaktion nicht zugänglich sind. Die Arbusow-Umlagerung von Diarylalkylphosphiten ist auf spezielle Fälle beschränkt; insbesondere mit kurzen Alkylresten substituierte Diarylalkylphosphite lassen sich in der bekannten Weise z.B. mit Alkyljodid als Katalysator nicht zu den Alkanphosphonsäurediarylestern umlagern (vgl. R.C. Laughlin, J. Org. Chem. 27, 3644 (1962)).

Aus der US-A 3 261 890 ist ein Verfahren zur Herstellung von Phosphorestern bekannt. Dabei werden Trialkyl- und Triarylester im Molverhältnis 1:2 umgesetzt. Der Nachteil dieses Verfahrens besteht jedoch darin, dass man stets gemischte Alkanphosphonsäurealkyl/arylester erhält.

Zwei neuere Verfahren zur Herstellung von Alkanphosphonsäurediarylestern benutzen die Umsetzung von Alkohol, vorzugsweise Methanol, mit Triarylphosphiten, z.B. Triphenylphosphit in Gegenwart eines Umlagerungskatalysators, der entweder eine sehr starke Säure oder aber Methyljodid ist (M.L. Honig, E.D. Weil, J. Org. Chem. 42, 379 (1977)). Dabei wird neben dem gewünschten Alkanphosphonsäurediarylester in äquimolaren Mengen das verdrängte Phenol freigesetzt, welches bei beiden Verfahren darüber hinaus mit Phenoläthern stark verunreinigt ist. Daher bestand ein erhebliches Interesse an einem Verfahren zur Herstellung von Alkanphosphonsäurediarylestern, welches die geschilderten Nachteile vermeidet.

Diese technische Aufgabe löst die vorliegende Erfindung in der Weise, dass aus wohlfeilen, im industriellen Massstab produzierten und gut zugänglichen Ausgangsstoffen Alkanphosphonsäurediarylester und bzw. Alkanphosphinsäurearylester als einzige Produkte, vorzugsweise als einziges Produkt, ohne Zwangsanfall eines anderen unerwünschten Produktes in guter Ausbeute in einstufiger Reaktion erzeugt werden.

Die vorliegende Erfindung betrifft daher ein Verfahren zur Herstellung von Alkanphosphonsäurediarylestern und bzw. Alkanphosphinsäurearylestern der allgemeinen Formel

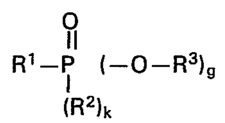

Ia

worin $R^1$ für einen gegebenenfalls substituierten $C_1$-$C_{20}$-Alkyl-, oder -Alkenylrest,
$R^2$ für einen gegebenenfalls substituierten $C_1$-$C_{20}$-Alkyl- oder -Alkenylrest oder für einen gegebenenfalls substituierten $C_6$-$C_{10}$-Aryl- oder -Aryloxyrest,
$R^3$ für einen gegebenenfalls substituierten $C_6$-$C_{10}$-Arylrest,
k für die Zahlen 0 und 1 und
g für die Zahlen 1 und 2 steht mit der Massgabe, dass $k + g = 2$, gegebenenfalls im Gemisch mit anderen Alkanphosphonsäurediarylestern, Alkanphosphinsäurearylestern oder Phosphinoxiden der allgemeinen Formel

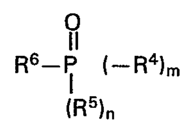

Ib

worin $R^4$ für einen gegebenenfalls substituierten $C_1$-$C_{20}$-Alkylrest, $C_6$-$C_{10}$-Arylrest oder $C_6$-$C_{10}$-Aryloxyrest,
$R^5$ unabhängig von $R^4$ für die gleichen Reste wie $R^4$,
$R^6$ unabhängig von $R^1$ für die gleichen Reste wie $R^1$,
n und m für die ganzen Zahlen 0, 1, 2 stehen mit der Massgabe, dass $n + m = 2$, welches dadurch gekennzeichnet ist, dass Aryloxy-Verbindungen des dreiwertigen Phosphors der allgemeinen Formel

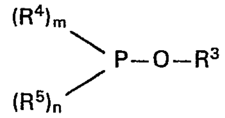

II

worin $R^3$, $R^4$, $R^5$, n, m die o.a. Bedeutung haben, wobei $n + m = 2$, in Gegenwart von Arbusow-Katalysatoren umgesetzt werden mit Alkylphosphiten bzw. Alkylphosphoniten der allgemeinen Formel

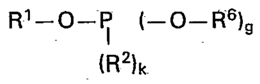

IIIa

oder deren Arbusow-Umlagerungsprodukten der allgemeinen Formel

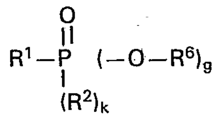

IIIb

worin $R^1$, $R^2$, $R^6$, k, g die o.a. Bedeutung haben wobei $k+g=2$, im Molverhältnis II : III von etwa g : 1.

Das erfindungsgemässe Verfahren lässt sich in seiner allgemeinen Form darstellen durch die nachfolgende Gleichung (1):

Gleichung 1

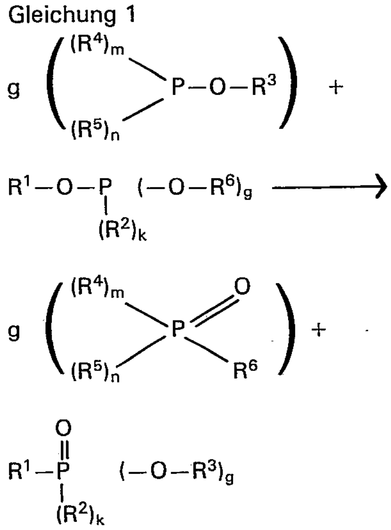

Ohne Änderung der anderen Grössen und Stoffe dieser Gleichung kann das Alkylphosphit bzw. Alkylphosphonit der allgemeinen Formel IIIa ersetzt werden durch das Alkanphosphonat bzw. Alkanphosphinat der allgemeinen Formel IIIb, wie in Gleichung 2 nochmals ausführlich dargestellt ist.

Gleichung 2

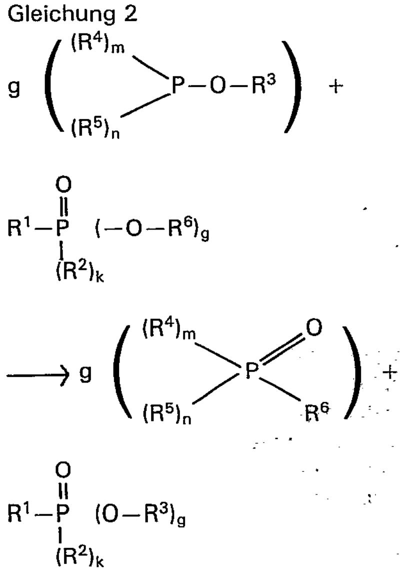

Bevorzugt ist jedoch jene Form des erfindungsgemässen Verfahrens, bei der die Produkte der allgemeinen Formel Ia und Ib identisch sind, also $R^1$ gleiche Bedeutung wie $R^6$ hat, $R^5$ gleich $R^2$ oder gleich $O-R^3$ ist, $R^4$ gleich $O-R^3$ ist und $n=k$ und $m=g$ ist. In diesem bevorzugten Fall nimmt die Reaktionsgleichung 1 die vereinfachte Form der Gleichung 3 an.

Gleichung 3

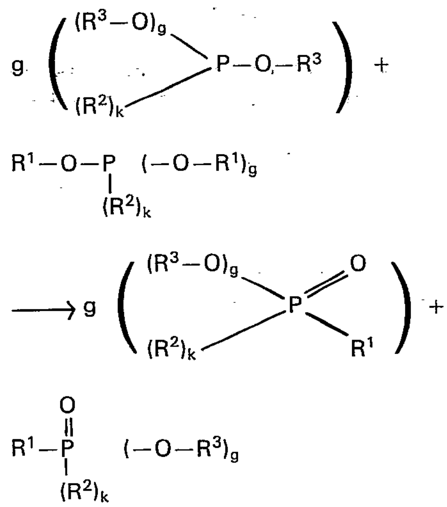

In der Ausführungsform, in der in Gleichung 3 der Index $k=0$, ergibt sich die Gleichung 4.

Gleichung 4

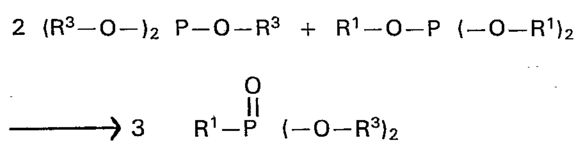

Gleichung 4 beschreibt die Umsetzung eines Triarylphosphits mit einem Trialkylphosphit zu einem einheitlichen Alkanphosphonsäurediarylester.

In der Ausführungsform des erfindungsgemässen Verfahrens, nach der in Gleichung 3 der Index $k=1$, ergibt sich die Gleichung 5.

Gleichung 5

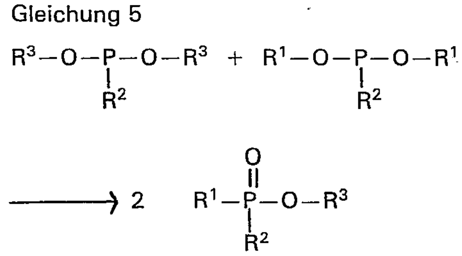

Gleichung 5 beschreibt, falls $R^2$ einen Alkyl-, Alkenyl- oder Arylrest bedeutet, die Umsetzung eines Phosphonigsäurediarylesters mit einem Phosphonigsäuredialkylester zu einem einheitlichen Alkanphosphinsäurearylester oder, falls $R^2$ = Aryloxy, die Umsetzung eines Triarylphosphits mit einem Aryldialkylphosphit zu einem einheitlichen Alkanphosphonsäurediarylester.

Geht man statt von den Alkylphosphiten von ihren Arbusow-Umlagerungsprodukten, also den Alkan-

phosphonsäuredialkylestern aus, dann tritt an die Stelle der Gleichung 4 die Gleichung 6.

Gleichung 6

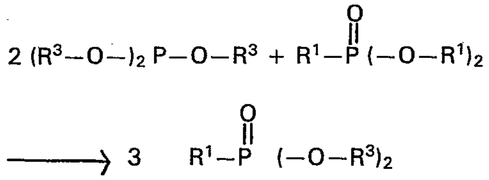

Gleichung 6 beschreibt die Umsetzung eines Triarylphosphits mit einem «symmetrischen» Alkanphosphonsäuredialkylester zu einem einheitlichen Alkanphosphonsäurediarylester.

Ersetzt man in Gleichung 5 die Phosphonigsäuredialkylester oder die Aryldialkylphosphite durch ihre Arbusow-Umlagerungsprodukte, also durch die Phosphinsäurealkylester oder Phosphonsäurealkylarylester, dann ergibt sich Gleichung 7.

Gleichung 7

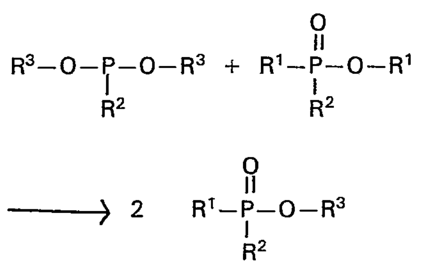

Gleichung 7 beschreibt, falls $R^2$ einen Alkyl-, Alkenyl- oder Arylrest bedeutet, die Umsetzung eines Phosphonigsäurediarylesters mit einem Phosphinsäurealkylester zu einem einheitlichen Alkanphosphinsäurearylester oder, falls $R^2$ = Aryloxy, die Umsetzung eines Triarylphosphits mit einem Phosphonsäurealkylarylester zu einem einheitlichen Alkanphosphonsäurediarylester.

Eine weitere bevorzugte Ausführungsform des erfindungsgemässen Verfahrens gemäss Gleichung 2 ist jene, bei der die Aryloxy-Verbindung des dreiwertigen Phosphors eine solche mit $R^4 = R^5 = O-R^3$ ist und als deren Reaktionspartner eine Verbindung der Struktur IIIb mit $R^2 = O-R^6$ und $R^1$ ungleich $R^6$ eingesetzt werden. Für diesen speziellen Fall vereinfacht sich die Gleichung 2 zu Gleichung 8.

Gleichung 8

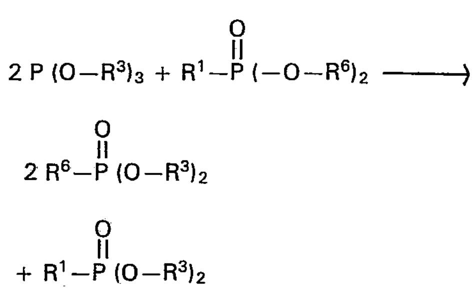

Die für das erfindungsgemässe Verfahren erforderlichen Ausgangsmaterialien der allgemeinen Formel II, die Aryloxy-Verbindungen des dreiwertigen Phosphors, also die Phosphinigsäurearylester, Phosphinigsäurediarylester und Phosphorigsäuretriarylester, wovon die beiden letzteren bevorzugt sind, werden teilweise in bedeutenden Mengen technisch hergestellt und können im übrigen nach bekannten und einfachen Verfahren in grosser Zahl hergestellt werden (z.B. Houben-Weyl, Methoden der Organ. Chemie, Stuttgart 1964, Bd. XII, Teil 2, S. 53-78, Teil 1, S. 208-211, S. 324-331).

Beispiele sind
Triphenylphosphit
Tris-p-kresylphosphit
Tris-m-kresylphosphit
Tris-p-chlorphenylphosphit
Tris-p-bromphenylphosphit
Tris-p-ethylphenylphosphit
Tris-p-isopropylphenylphosphit
Tris-m-isopropylphenylphosphit
Tris-o-isopropylphenylphosphit
Tris-p-tert.-butylphenylphosphit
Tris-p-methoxyphenylphosphit
Tris-(o,m,p)-kresylphosphit
Di-phenyl-kresylphosphit
Tris-(o,m,p)-isopropylphenylphosphit
Diphenyl-β-naphthylphosphit
Methanphosphonigsäure-diphenylester
Methanphosphonigsäure-dikresylester
Ethanphosphonigsäure-diphenylester
Vinylphosphonigsäurediphenylester
Chlormethanphosphonigsäurediphenylester
Butanphosphonigsäurediphenylester
Benzolphosphonigsäurediphenylester
p-Dimethylaminobenzolphosphonigsäurediphenylester
Dimethylphosphinigsäurephenylester
Dibutylphosphinigsäurephenylester
Diphenylphosphinigsäurephenylester.

Auch die für das Verfahren der Erfindung erforderlichen Ausgangsmaterialien der allgemeinen Formel IIIa, also die Alkylphosphite und Alkylphosphonite, sind zum Teil grosstechnische Produkte und können im übrigen nach bekannten und einfachen Verfahren in grosser Zahl hergestellt werden (s. z.B. Houben-Weyl, Methoden der Organ. Chemie, 4. Auflage, Stuttgart 1964, Bd. XII, Teil 1, S. 324-331, Teil 2, S. 53-78).

Beispiele sind
Trimethylphosphit
Triethylphosphit
Tris-i-propylphosphit
Tris-n-propylphosphit
Tris-i-butylphosphit
Tris-n-butylphosphit
Tris-n-hexylphosphit
Tris-2-ethylhexylphosphit
Tri-dodecylphosphit
Tris-2-ethoxyethylphosphit
Tris-2-phenoxyethylphosphit
Tris-2-chlorethylphosphit
Tris-2-chlorpropylphosphit
Triallylphosphit
Tribenzylphosphit

Phenyldiethylphosphit
Methanphosphonigsäuredimethylester
Ethanphosphonigsäuredimethylester
Vinylphosphonigsäuredimethylester
Chlormethanphosphonigsäuredimethylester
Butanphosphonigsäuredimethylester
Cyclohexanphosphonigsäuredimethylester
Benzolphosphonigsäuredimethylester.

Die anstelle der Alkylphosphite und Alkylphosphonite der allgemeinen Formel IIIa in das erfindungsgemässe Verfahren einsetzbaren Umlagerungsprodukte der allgemeinen Formel IIIb sind ebenfalls in grosser Zahl bekannt und präparativ leicht zugänglich und zum Teil technische Produkte. Sie können selbstverständlich auch auf anderen Wegen als auf dem der Umlagerung der Alkylphosphite und Alkylphosphonite der allgemeinen Formel IIIa gewonnen worden sein. Verfahren zu ihrer Herstellung sind näher beschrieben in Houben-Weyl, Methoden der Org. Chemie, 4. Auflage, Stuttgart 1964, Bd. XII, S. 423-523 (Phosphonsäuredialkylester) und S. 247-262 (Phosphinsäurealkylester). Auf die Phosphonsäureester und Phosphinsäureester der allgemeinen Formel IIIb wird man insbesondere dann zurückgreifen, wenn der Rest $R^1$ so gestaltet ist, dass aus Gründen, die im Mechanismus der Arbusow-Umlagerung liegen, Arbusow-Umlagerung aus den Alkylphosphiten und Alkylphosphoniten der allgemeinen Formel IIIa in die Phosphonsäuredialkylester und Phosphinsäurealkylester der allgemeinen Formel IIIb nicht durchführbar sind.

Geeignete Phosphonsäurealkylester und Phosphinsäurealkylester der allgemeinen Formel IIIb sind z.B.:
Ethanphosphonsäurediethylester
Methanphosphonsäuredimethylester
n-Propanphosphonsäuredi-n-propylester
Butanphosphonsäuredibutylester
Pentanphosphonsäuredipentylester
Oktanphosphonsäuredioktylester
Ethanphosphonsäuredimethylester
i-Propanphosphonsäuredimethylester
i-Butanphosphonsäuredimethylester
Dodecanphosphonsäuredimethylester
2-Methoxyethanphosphonsäuredimethylester
2-Phenoxyethanphosphonsäuredimethylester
2-Chlorethanphosphonsäuredimethylester
Vinylphosphonsäuredimethylester
Allylphosphonsäuredimethylester
Benzolphosphonsäuredimethylester
2-Cyanethanphosphonsäuredimethylester
Diphenylphosphinsäuremethylester
Dimethylphosphinsäuremethylester.

Die für die Durchführung des erfindungsgemässen Verfahrens erforderlichen Arbusow-Katalysatoren sind entweder Alkylierungsmittel oder sehr starke Säuren. Als Arbusow-Katalysatoren wirksame Alkylierungsmittel sind z.B. Alkylchloride, Alkylbromide und vorzugsweise Alkyljodide, wobei die zugehörigen Alkylreste in mannigfacher Weise substituiert sein können (Beispiele dafür finden sich in Houben-Weyl, Methoden der Org. Chemie, 4. Auflage, Stuttgart 1964, Bd. XIII, Teil 1, S. 433-446), weiterhin auch andere bekannte Alkylierungsmittel wie Sulfonsäureester, Schwefelsäureester und Sulfone. Als Arbusow-Katalysatoren geeignet starke Säuren sind Fluorsulfonsäuren, z.B. Trifluormethansulfonsäure, Perfluorbutansulfonsäure, Perfluoroktansulfonsäure. Werden Alkylierungsmittel als Arbusow-Katalysatoren eingesetzt, so wird vorteilhafterweise ein solches gewählt, welches den gleichen Alkylrest $R^6$ wie der herzustellende Alkanphosphonsäurediarylester bzw. Alkanphosphinsäurearylester der allgemeinen Formel Ib trägt. Wird dagegen ein Alkylierungsmittel gewählt, dessen Alkylrest nicht mit dem genannten Rest $R^6$ übereinstimmt, so ist damit zu rechnen, dass im Reaktionsprodukt der allgemeinen Formel Ib ein Teil der Reste $R^6$ durch den im zugefügten Alkylierungsmittel enthaltenen Alkylrest ersetzt ist. Die Arbusow-Katalysatoren werden in Mengen von 0,01 bis 10 Mol-%, bezogen auf herzustellende Alkanphosphonsäurediarylester bzw. Alkanphosphinsäurearylester der allgemeinen Formel Ia/Ib, vorzugsweise in Mengen von 0,5 bis 5 Mol-% eingesetzt.

Statt der reinen Komponenten II und IIIa bzw. IIIb können auch Gemische dieser Reaktanten eingesetzt werden. Insbesondere können nebeneinander Reaktanten der allgemeinen Formel IIIa und der allgemeinen Formel IIIb, in denen beiden $R^1$, $R^2$ und $R^6$ identische Bedeutung haben, in die erfindungsgemässe Reaktion eingesetzt werden. In diesem Fall wird ein einheitliches Produkt genauso erhalten als sei nur einer der beiden Stoffe IIIa oder IIIb eingesetzt worden. Eine weitere vorteilhafte Variante des Verfahrens zur Herstellung von verschiedenen Alkanphosphonsäurediarylestern bzw. Alkanphosphinsäurearylestern in einem frei wählbaren Verhältnis ist der gleichzeitige Einsatz von zwei oder mehr Stoffen der Struktur IIIa und/oder IIIb mit identischen Resten $R^2$ und $R^6$ und gleichen Werten für k und g, aber mit verschiedenen Resten $R^1$.

Das erfindungsgemässe Verfahren nach Gleichung 1 kann in Anwesenheit von Lösungsmitteln oder, wie bevorzugt, ohne Lösungsmittel durchgeführt werden. Als Lösungsmittel kommen die Reaktionsteilnehmer und Reaktionsprodukte sowie inerte hochsiedende Flüssigkeiten in Frage.

Das Verfahren nach Gleichung 1 kann in einem Temperaturbereich von ca. 170°C bis ca. 300°C durchgeführt werden. Bevorzugt ist der Bereich von ca. 200°C bis ca. 250°C. Die Temperatursteuerung kann in üblicher Weise z.B. durch Aussenkühlung oder durch Siedekühlung erfolgen.

Gewöhnlich wird das erfindungsgemässe Verfahren unter Normaldruck ausgeführt, doch kann es vorteilhaft sein, um der Flüchtigkeit des Arbusow-Katalysators oder einer Reaktionskomponente vorzubeugen, einen überatmosphärischen Druck aufrechtzuerhalten oder aber, um z.B. eine Siedekühlung im gewünschten Temperaturbereich zu ermöglichen, einen verminderten Druck zu erzeugen.

Obwohl es auf den Reaktionsverlauf nur einen sehr geringen Einfluss hat, ist es zu empfehlen, Luft von der Reaktionsmischung fern zu halten, um der Gefahr der Entzündung bei Reaktionstemperatur und der Oxidation der eingesetzten dreiwertigen Phosphorverbindungen vorzubeugen.

Das erfindungsgemässe Verfahren kann sowohl

kontinuierlich wie auch diskontinuierlich gestaltet werden. Bei der diskontinuierlichen Verfahrensweise wird entweder die Aryloxy-Verbindung des dreiwertigen Phosphors der allgemeinen Formel II mit oder ohne Arbusow-Katalysator vorgelegt und das Alkylphosphit bzw. Alkylphosphonit der Formel IIIa oder das Alkanphosphonat bzw. Alkanphosphinat der Formel IIIb mit oder ohne Arbusow-Katalysator bei Reaktionstemperatur nachgeführt oder aber das Alkanphosphonat bzw. Alkanphosphinat der Formel IIIb wird mit oder ohne Arbusow-Katalysator vorgelegt und die Aryloxy-Verbindung des dreiwertigen Phosphors wird mit oder ohne Arbusow-Katalysator bei Reaktionstemperatur nachgeführt.

Der Arbusow-Katalysator kann zusammen mit der nachzuführenden Komponente oder getrennt von derselben zugegeben werden. Es können auch im Verlauf der Reaktion weitere Mengen der vorgelegten Komponente oder des Alkylphosphits oder Alkylphosphonits der Formel IIIa nachgeführt werden. Wegen der Gefahr einer schwierig zu kontrollierenden Michaelis-Arbusow-Umlagerung der Alkylphosphite oder Alkylphosphonite der Formel IIIa oder plötzlich einsetzender exothermer Reaktion nach Gleichung 1 ist es weniger zu empfehlen, die Alkylphosphite oder Alkylphosphonite der allgemeinen Formel IIIa für sich oder im Gemisch mit den Aryloxy-Verbindungen des dreiwertigen Phosphors der Formel II und/oder im Gemisch mit Arbusow-Katalysatoren vorzulegen, oder den Arbusow-Katalysator in diese vorgelegten Stoffe einzutragen. In Fällen, in denen diese Reaktion langsam oder wenig exotherm verläuft, sowie bei kleineren Ansätzen sind die letztgenannten Wege sowie das Vorlegen von Mischungen aus Aryloxy-Verbindung des dreiwertigen Phosphors (Formel II) und Alkanphosphonat bzw. Alkanphosphinat (Formel IIIb) trotzdem mit gutem Erfolg durchführbar. Kontinuierlich kann das Verfahren in den üblichen und bekannten Verfahrensweisen und den üblichen Reaktionsapparaten ausgeführt werden.

Die Reaktionsprodukte fallen in hoher Reinheit an. Eine weitere Reinigung kann erreicht werden durch übliche Massnahmen, z.B. Abziehen leichter siedender Verunreinigungen im Vakuum. Destillation der Produkte führt zu hochreinen Alkanphosphonsäurediarylestern bzw. Alkanphosphinsäurearylestern mit bis zu 99,9% und mehr Reinheit. Neben den destillativen Methoden oder an deren Stelle können auch Waschverfahren, z.B. Auswaschen der Verunreinigungen mit Wasser und mit wässrigen Lösungen von Oxidationsmittel, Säuren, Alkalien oder Puffern zur weiteren Reinigung herangezogen werden.

Die Erfindung wird durch die nachfolgenden Beispiele näher erläutert (%-Angaben beziehen sich auf Gew.-% — soweit nicht anders vermerkt ist).

Beispiel 1

Eine Mischung, bestehend aus 64 g Trimethylphosphit (0,52 Mol), 310 g Triphenylphosphit (95,7 g %ige technische Qualität) und 2 ml Methyljodid, wird unter Rühren erhitzt. Bei etwa 100°C setzt eine exotherme Reaktion ein. Nach Abklingen dieser Reaktion wird weiter erhitzt. Ab 210°C verläuft die Reaktion wiederum exotherm. Durch Luftkühlung wird die Temperatur auf 230°C nach oben begrenzt. Nach Abklingen der exothermen Reaktion wird noch 10 Minuten bei 230°C nachgerührt. Nach Abziehen der leicht flüchtigen Anteile im Vakuum erhält man 362 g eines rohen Methanphosphonsäurediphenylesters mit einer Reinheit von 97%.

Durch fraktionierte Destillation bei einem Druck von $1{,}33 \cdot 10^{-3}$ Bar (1 mm Hg) werden 345 g Methanphosphonsäurediphenylester in 99,8%iger Reinheit erhalten.

Beispiel 2

62 g Methanphosphonsäuredimethylester (0,5 Mol) werden mit 310 g Triphenylphosphit (95,7%ige techn. Qualität) und 2 ml Methyljodid vermischt und auf 220°C erhitzt. Die freiwerdende Reaktionswärme wird in einem leichten Luftstrom abgeführt, so dass die Reaktionstemperatur von 240°C nicht überschritten wird. Die exotherme Reaktion dauert ca. 20 Minuten. Anschliessend wird die Mischung noch 10 Minuten bei 240°C nachgerührt. Nachdem die leicht flüchtigen Anteile im Vakuum abgezogen sind, wiegt der Rückstand 364 g und besitzt eine Reinheit von 87% an Methanphosphonsäurediphenylester.

Beispiel 3

Mittels einer Labor-Dosierpumpe fördert man eine Mischung, bestehend aus ca. 82 Gew.-% Triphenylphosphit, ca. 17 Gew.-% Trimethylphosphit und ca. 0,8 Gew.-% Methyljodid in den ersten Reaktor einer dreistufigen Reaktionskaskade. Die Temperatur in allen Stufen wird bei 240°C gehalten, wobei die erste Reaktionsstufe nach der Anfahrphase stets leicht gekühlt werden muss. Die mittlere Verweilzeit des Reaktionsgutes beträgt insgesamt etwa 1,5 Stunde, also ca. 30 Minuten pro Reaktionsstufe.

Insgesamt werden bei 15 l Reaktionsvolumen 60,5 kg Trimethylphosphit (488 Mol), 300 kg Triphenylphosphit (Gehalt: 95,7%, Rest ist Phenol) (926 Mol) und 2 l Methyljodid umgesetzt.

Das aufgefangene Rohprodukt ist 95,0%ig an Methanphosphonsäurediphenylester und es wird zur weiteren Reinigung chargenweise über eine mit 10 mm-Porzellan-Sattelkörpern gefüllte 1 m-Kolonne bei einem Destillat-Rücklauf-Verhältnis von 1 : 1 bis 1 : 3 im Vakuum mit $1{,}33 \cdot 10^{-3}$ Bar (1 mm Hg-Säule) Druck am Kolonnenkopf destilliert. Das als leichtest siedende Komponente am Anfang entweichende Methyljodid wird in einer Trockeneis-gekühlten Vorlage kondensiert und auf diese Weise fast quantitativ zurückgewonnen.

Nach vollständiger Aufarbeitung werden 336,1 kg Methanphosphonsäurediphenylester mit einer durchschnittlichen Reinheit von 99,2% erhalten. Die Ausbeute an reinem Methanphosphonsäurediphenylester beträgt demnach 96,8% der Theorie.

Durch Änderung des Rücklaufverhältnisses bei der Vakuum-Destillation liessen sich in den einzelnen Chargen Reinheiten zwischen 99,0% und 99,8% einstellen.

Da ein wesentlicher Teil der Destillationsleistung für die Abtrennung des Phenols — eingeschleppt mit dem Triphenylphosphit — verbraucht wird, werden mit reinem Triphenylphosphit deutlich bessere Ergebnisse bei vereinfachter Aufarbeitung erzielt.

Beispiel 4

Mittels einer Labor-Dosierpumpe fördert man eine Mischung, bestehend aus 82% Triphenylphosphit techn. 95,7%ige Ware, 17% Trimethylphosphit und 0,8% Methyljodid, in den ersten Reaktor einer zweistufigen Reaktionskaskade. Die Temperatur in beiden Stufen liegt bei 240°C, wobei die erste Reaktionsstufe stets leicht gekühlt werden muss. Die mittlere Verweilzeit des Reaktionsgutes beträgt insgesamt etwa 1 Stunde. Das aufgefangene Rohprodukt ist ca. 95%ig an Methanphosphonsäurediphenylester.

Beispiel 5

Mittels einer Labor-Dosierpumpe fördert man eine Mischung, bestehend aus 82% Triphenylphosphit (techn. Qualität), 17% Methanphosphonsäuredimethylester und 0,8% Methyljodid in den ersten Reaktor einer zweistufigen Reaktionskaskade. Die Temperatur in beiden Stufen liegt bei 220°C, wobei die erste Reaktionsstufe leicht gekühlt werden muss. Die mittlere Verweilzeit des Reaktionsgutes beträgt insgesamt etwa 1 Stunde. Das aufgefangene Rohprodukt ist ca. 89,7%ig an Methanphosphonsäurediphenylester.

Bereits im Ablauf des ersten Reaktors ist ein Umsetzungsgrad von 82% erreicht, die Verweilzeit kann also weiter verkürzt werden.

Beispiele 6 - 12

In den Beispielen 6 - 8 und 12 wird die Verfahrensweise von Beispiel 2, in den Beispielen 9 - 11 die Verfahrensweise von Beispiel 1 mit kleinen Abänderungen wiederholt.

Die jeweiligen Änderungen sind in der nachfolgenden Auflistung aufgeführt. Alle Angaben beziehen sich auf jeweils einen Ansatz mit 310 g Triphenylphosphit technischer Qualität (95,7%ig nach gaschromatographischer Analyse), genommen als 1,0 Mol.

| Beispiel Nr. | Einsatz Methanphosphonat (MPN)/Trimethylphosphit (TMPI) [mol/mol TP] | | Reaktionstemperatur [°C] | $CH_3J$-Einsatz [ml/mol TP] | Ausbeute Reinprodukt [g/mol TP] | Ausbeute Rohprodukt [g/mol TP] | Gehalt im Rohprodukt [%] |
|---|---|---|---|---|---|---|---|
| 6 | 0,51 | (MPN) | 250 | 2 | | 372 | 88,8 |
| 7 | 0,51 | (MPN) | 260 | 1 | | 368* | 88,0 |
| 8 | 0,47 | (MPN) | 230 | 2 | | 366** | 90,4 |
| 9 | 0,50 | (TMPI) | 210 | 2 | | 370* | 91,3 |
| 10 | 0,52 | (TMPI) | 230 | 1 | | 371* | 90,6 |
| 11 | 0,48 | (TMPI) | 230 | 2 | 326 | 366** | 91,4 |
| 12 | 0,45<br>0,10 | (MPN)<br>(TMPI) | 230 | 2 | | 371 | 87,9 |

* Reaktionsdauer incl. Nachreaktion: 60 min.
** Produkt ist dunkel gefärbt.

Beispiel 13

68 g Methanphosphonsäuredimethylester (0,55 Mol) werden mit 310 g Triphenylphosphit technischer Reinheit und 1 ml Perfluorbutansulfonsäure auf 240°C erhitzt und 30 Minuten lang bei dieser Temperatur gerührt. Anschliessend wird das abreagierte Gemisch fraktioniert destilliert. Der Methanphosphonsäurediphenylester hat einen Siedepunkt von 135°C bei $1,33 \cdot 10^{-3}$ Bar (1 mm Hg). Die Hauptlaufmenge beträgt 345 g (92,7% der Theorie) und hat eine Reinheit von 99,8%.

Beispiel 14

68 g Trimethylphosphit (0,55 Mol) werden mit 310 g Triphenylphosphit technischer Reinheit und 1 ml Perfluorbutansulfonsäure langsam erhitzt. Ab 120°C beginnt eine exotherme Umsetzung. Anschliessend wird weiter bis 240°C erhitzt und 40 Minuten bei dieser Temperatur gehalten. Der Gehalt an Methanphosphonsäurediphenylester im Rohprodukt beträgt nach gaschromatographischer Analyse 93,4%.

Beipsiel 15

Eine Mischung aus 30 g Methanphosphonsäuredimethylester (0,24 Mol), 150 g Triphenylphosphit technischer Reinheit und 1 ml p-Toluolsulfonsäuremethylester wird langsam auf 230°C erhitzt. In dem Masse, wie der Rückfluss nachlässt, wird die Temperatur auf 250°C gesteigert und bei dieser Temperatur 80 Minuten gehalten. Der Anteil an Methanphosphonsäurediphenylester im Rohprodukt beträgt 74,3%, daneben sind u.a. noch Triphenylphosphit und Methanphosphonsäuredimethylester vorhanden.

Beispiel 16

Eine Mischung aus 64 g Methanphosphonsäuredimethylester (0,516 Mol), 352 g Tris-p-kresylphosphit (1,00 Mol) und 2 ml Methyljodid wird langsam auf 245°C erhitzt und 30 Minuten bei 245°C getempert. Vakuumdestillation ergibt 376 g Methanphosphonsäuredi-p-kresylester 98,6%iger Reinheit; Kp. 144°C bei $1,33 \cdot 10^{-3}$ Bar.

Beispiel 17

85 g Triethylphosphit (0,512 Mol), 310 g Triphenylphosphit technischer Reinheit und 1,5 ml Ethyljodid werden unter Rühren erhitzt und 30 Minuten bei 270°C gehalten. Im Rohprodukt wird gaschromatographisch ein Gehalt von 92,0% an Ethanphosphonsäurediphenylester festgestellt. Durch

Destillation werden 330 g dieses Produktes als Hauptlauf isoliert; KP. 155°C bei 1,33·$10^{-3}$ Bar.

Beispiel 18

104 g Tri-n-propylphosphit (0,50 Mol), 310 g Triphenylphosphit technischer Reinheit und 2 ml Methyljodid werden gemischt und aufgeheizt. Ab 220°C beginnt das Gemisch zu sieden. In dem Masse, wie der Rückfluss nachlässt, wird die Temperatur bis auf 270°C gesteigert und danach wird die Reaktionsmischung 45 Minuten bei dieser Temperatur gehalten. Danach lässt sich gaschromatographisch ein Gehalt von 65,5% n-Propanphosphonsäurediphenylester und von 4,2% Methanphosphonsäurediphenylester feststellen.

Beispiel 19

67,4 g Tris-2-chlorethylphosphonit (0,25 Mol), 155 g Triphenylphosphit und 1 ml Methyljodid werden auf 250-260°C langsam erwärmt. Im Verlauf einer halben Stunde sinkt die Temperatur der Reaktionsmischung wegen Rückflussbildung auf 245°C. Im rohen Reaktionsprodukt lassen sich danach 41,7% 2-Chlorethanphosphonsäurediphenylester unter den flüchtigen Bestandteilen gaschromatographisch nachweisen.

Beispiel 20

68 g Vinylphosphonsäuredimethylester (0,50 Mol), 310 g Triphenylphosphit und 2 ml Methyljodid werden auf 210°C erhitzt. Die exotherme Reaktion dauert etwa 15 Minuten.

Anschliessend hält man das Reaktionsgemisch noch 10 Minuten zwischen 210 und 220°C. Neben einigen Verunreinigungen liegen 62% Methanphosphonsäurediphenylester und 20,8% Vinylphosphonsäurediphenylester in der Mischung vor (gaschromatographische Analyse). Fraktionierte Destillation ergibt als Hauptlauf 302 g eines unter diesen Bedingungen nicht weiter trennbaren Gemisches von Methanphosphonsäurediphenylester und Vinylphosphonsäurediphenylester im Verhältnis 74 : 24 (gaschromatographisch ermitteltes Flächenverhältnis).

Beispiel 21

84 g 2-Methoxyethanphosphonsäuredimethylester (0,50 Mol), 310 g Triphenylphosphit technischer Reinheit und 2 ml Methyljodid werden auf 210°C erwärmt und nach Abklingen der exothermen Reaktion noch 15 Minuten bei 212°C getempert. Im Reaktionsgemisch liegen Methanphosphonsäurediphenylester und 2-Methoxyethanphosphonsäurediphenylester im Molverhältnis 2 : 1 vor ($^1$H-NMR-Analyse).

**Patentansprüche**

1. Verfahren zur Herstellung von Alkanphosphonsäurediarylestern und bzw. Alkanphosphinsäurearylestern der allgemeinen Formel

$$R^1-\underset{(R^2)_k}{\underset{|}{\overset{\overset{O}{\|}}{P}}}\;(-O-R^3)_g \qquad Ia$$

worin $R^1$ für einen gegebenenfalls substituierten $C_1$-$C_{20}$-Alkyl- oder -Alkenylrest,
$R^2$ für einen gegebenenfalls substituierten $C_1$-$C_{20}$-Alkyl- oder -Alkenylrest oder für einen gegebenenfalls substituierten $C_6$-$C_{10}$-Aryl- oder -Aryloxyrest,
$R^3$ für einen gegebenenfalls substituierten $C_6$-$C_{10}$-Arylrest,
k für die Zahlne 0 und 1 und
g für die Zahlen 1 und 2 steht mit der Massgabe, dass $k+g=2$, gegebenenfalls im Gemisch mit anderen Alkanphosphonsäurediarylestern, Alkanphosphinsäurearylestern oder Phosphinoxiden der allgemeinen Formel

$$R^6-\underset{(R^5)_n}{\underset{|}{\overset{\overset{O}{\|}}{P}}}\;(-R^4)_m \qquad Ib$$

worin $R^4$ für einen gegebenenfalls substituierten $C_1$-$C_{20}$-Alkylrest, $C_6$-$C_{10}$-Arylrest oder $C_6$-$C_{10}$-Aryloxyrest,
$R^5$ unabhängig von $R^4$ für die gleichen Reste wie $R^4$,
$R^6$ unabhängig von $R^1$ für die gleichen Reste wie $R^1$,
n und m für die ganzen Zahlen 0, 1, 2 stehen mit der Massgabe, dass $n+m=2$, dadurch gekennzeichnet, dass Aryloxy-Verbindungen des dreiwertigen Phosphors der allgemeinen Formel

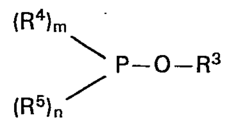

II

worin $R^3$, $R^4$, $R^5$, n, m die o.a. Bedeutung haben, wobei $n+m=2$, in Gegenwart von Arbusow-Katalysatoren mit Alkylphosphiten bzw. Alkylphosphoniten der allgemeinen Formel

$$R^1-O-\underset{(R^2)_k}{\underset{|}{P}}\;(-O-R^6)_g \qquad IIIa$$

oder deren Arbusow-Umlagerungsprodukten der allgemeinen Formel

$$R^1-\underset{(R^2)_k}{\underset{|}{\overset{\overset{O}{\|}}{P}}}\;(-O-R^6)_g \qquad IIIb$$

worin $R^1$, $R^2$, $R^6$, k, g die o.a. Bedeutung haben, wobei $k+g=2$, im Molverhältnis II : III von etwa g : 1 umgesetzt werden.

2. Verfahren nach Anspruch 1, dadurch gekennzeichnet, dass ein Triarylphosphit als Aryloxy-Verbindung des 3-wertigen Phosphors mit einem Phosphonsäuredialkylester im Molverhältnis 2 : 1 umgesetzt wird.

3. Verfahren nach Anspruch 1 oder 2, dadurch gekennzeichnet, dass ein Triarylphosphit als Aryloxy-Verbindung des 3-wertigen Phosphors mit einem Trialkylphosphit im Molverhältnis 2 : 1 umgesetzt wird.

**Revendications**

1. Procédé de préparation d'esters diaryliques d'acides alcane-phosphoniques et/ou d'esters aryliques d'acides alcane-phosphiniques de formule générale:

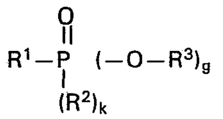

Ia

dans laquelle
$R^1$ représente un groupe alcényle ou un groupe alkyle en $C_1$-$C_{20}$ éventuellement substitué,
$R^2$ représente un groupe alcényle ou un groupe alkyle en $C_1$-$C_{20}$ éventuellement substitué ou un groupe aryloxy ou un groupe aryle en $C_6$-$C_{10}$ éventuellement substitué,
$R^3$ représente un groupe aryle en $C_6$-$C_{10}$ éventuellement substitué,
k représente les nombres 0 et 1, et
g représente les nombres 1 et 2, avec cette restriction que $k+g=2$, éventuellement en mélange avec d'autres esters diaryliques d'acides alcane-phosphoniques, d'autres esters aryliques d'acides alcane-phosphiniques ou des oxydes phosphiniques de formule générale:

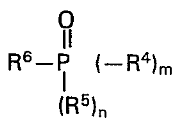

Ib

dans laquelle
$R^4$ représente un groupe aryloxy en $C_6$-$C_{10}$, un groupe aryle en $C_6$-$C_{10}$ ou un groupe alkyle en $C_1$-$C_{20}$ éventuellement substitué,
$R^5$ représente, indépendamment de $R^4$, les mêmes radicaux que celui-ci,
$R^6$ représente, indépendamment de $R^1$, les mêmes radicaux que celui-ci,
n et m représentent les nombres entiers 0, 1 et 2, avec cette restriction que $n+m=2$, caractérisé en ce qu'on fait réagir des composés aryloxy du phosphore trivalent de formule générale:

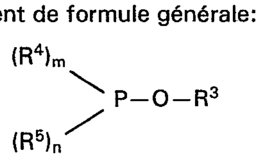

II

dans laquelle $R^3$, $R^4$, $R^5$, n et m ont les significations indiquées ci-dessus, $n+m=2$, en présence de catalyseurs d'Arbussow avec des phosphites d'alkyle ou des phosphonites d'alkyle de formule générale:

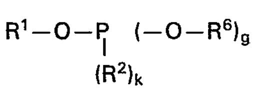

IIIa

ou leurs produits de transposition de formule générale:

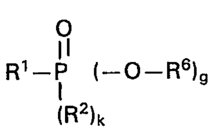

IIIb

où $R^1$, $R^2$, $R^6$, k et g ont les significations indiquées ci-dessus, $k+g=2$, dans le rapport molaire II : III d'environ g : 1.

2. Procédé suivant la revendication 1, caractérisé en ce que, comme composé aryloxy du phosphore trivalent, on fait réagir un phosphite de triaryle avec un ester dialkylique d'acide phosphonique dans le rapport molaire de 2 : 1.

3. Procédé suivant la revendication 1 ou 2, caractérisé en ce que, comme composé aryloxy du phosphore trivalent, on fait réagir un phosphite de triaryle avec un phosphite de trialkyle dans le rapport molaire de 2 : 1.

**Claims**

1. Process for the preparation of alkane phosphonic acid diaryl esters and/or alkane phosphinic acid aryl esters of the general formula

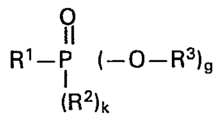

Ia

wherein
$R^1$ represents an optionally substituted $C_1$-$C_{20}$-alkyl or -alkenyl radical,
$R^2$ represents an optionally substituted $C_1$-$C_{20}$-alkyl or -alkenyl radical or an optionally substituted $C_6$-$C_{10}$-aryl or -aryloxy radical,
$R^3$ represents an optionally substituted $C_6$-$C_{10}$-aryl radical,
k represents the number 0 or 1 and
g represents the number 1 or 2, with the proviso that $k+g=2$, optionally in admixture with other alkane phosphonic acid diaryl esters, alkane phosphonic acid aryl esters or phosphine oxides of the general formula

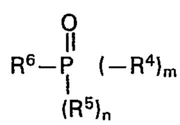

Ib

wherein
$R^4$ represents an optionally substituted $C_1$-$C_{20}$-alkyl radical, $C_6$-$C_{10}$-aryl radical or $C_6$-$C_{10}$-aryloxy radical,
$R^5$, independently of $R^4$, represents the same radicals as $R^4$,
$R^6$, independently of $R^1$, represents the same radicals as $R^1$, and
n and m represent the integers 0, 1 or 2, with the proviso that $n+m=2$, characterised in that aryloxy compounds of trivalent phosphorus of the general formula

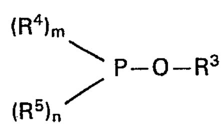

II

wherein
$R^3$, $R^4$, $R^5$, n, and m have the abovementioned meaning, wherein $n+m=2$, are reacted, in the presence of Arbusow catalysts, with alkyl phosphites or alkyl phosphonites of the general formula

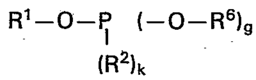

IIIa

or their rearrangement products of the general formula

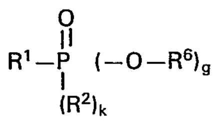

IIIb

wherein

$R^1$, $R^2$, $R^6$, k, and g have the abovementioned meaning, wherein $k+g=2$, in a molar ratio of II : III of approximately g : 1.

2. Process according to claim 1, characterised in that a triaryl phosphite, as an aryloxy compound of trivalent phosphorus, is reacted with a phosphonic acid dialkyl ester in a molar ratio of 2 : 1.

3. Process according to claim 1 or 2, characterised in that a triaryl phosphite, as an aryloxy compound of 3-valent phosphorus, is reacted with a trialkyl phosphite in a molar ratio of 2 : 1.